# EUROPEAN PATENT SPECIFICATION

(11) **EP 2 554 348 B1**
(45) Date of publication and mention of the grant of the patent: **20.12.2017**
(21) Application number: 11765496.2
(22) Date of filing: 28.03.2011
(51) Int. Cl.: B29B 11/16, B29C 70/08, B29C 70/24, B29C 70/30, B29K 105/24, B29K 105/08

(54) **METHOD FOR LAMINATING FIBER-REINFORCED THERMOPLASTIC RESIN PREPREG**
VERFAHREN ZUR BESCHICHTUNG EINES FASERVERSTÄRKTEN THERMOPLASTISCHEN HARZPREPREGS
PROCÉDÉ POUR LA STRATIFICATION DE PRÉIMPRÉGNÉS DE RÉSINE THERMOPLASTIQUE RENFORCÉE DE FIBRES

(30) Priority: 31.03.2010 JP 2010080046
(43) Date of publication of application: 06.02.2013
(73) Proprietor: Hiroshima Prefecture, Naka-ku Hiroshima-shi, Hiroshima 730-8511 (JP); Tokai Industrial Sewing Machine Co., Ltd., Kasugai-shi, Aichi 486-0901 (JP)
(72) Inventor: SHIMOHARA, Ichiro, Kure-shi Hiroshima 737-0004 (JP); IKEDA, Shin-ya, Kure-shi Hiroshima 737-0004 (JP); MATSUBA, Akira, Kure-shi Hiroshima 737-0004 (JP); KONO, Yosuke, Kure-shi Hiroshima 737-0004 (JP); NISHIDA, Hironori, Kure-shi Hiroshima 737-0004 (JP); KONDOU, Tetsuro, Kasugai-shi Aichi 486-0901 (JP)
(74) Representative: Isarpatent
(86) International application number: PCT/JP2011/057579
(87) International publication number: WO 2011/125596

(56) References cited:
- EP-A1- 2 090 423
- JP-A- 2001 096 653
- JP-A- 2001 096 653
- JP-A- 2006 192 727
- JP-A- 2007 001 089
- JP-A- 2007 001 089
- JP-A- 2008 290 421
- JP-A- 2008 290 421

## Description

### TECHNICAL FIELD

The present invention relates to a method for laminating prepreg tapes each of which is a composite material of resin and reinforcing fibers serving as a reinforcing material. More particularly, the present invention relates to a method for forming a near net shape of a mold product having a predetermined shape using prepreg tapes each integrally formed of thermoplastic resin and reinforcing fibers serving as a reinforcing material.

### BACKGROUDNART

Patent Document 1 discloses a method for forming a fiber-reinforced thermoplastic composite material, which method includes the following steps. (1) A multi-axial laminated large sheet is formed by laminating a plurality of layers each composed of fiber-reinforced thermoplastic resin prepreg tapes each of which is made of reinforcing fibers and thermoplastic resin impregnated to the fibers, wherein each layer's prepreg tapes are disposed in a manner that the fibers contained therein are oriented in a direction different from fibers contained in prepreg tapes of other layers, and stitching the plurality of layers together. (2) The multi-axial laminated large sheet is shaped into a predetermined shape by a cutting or a laminating operation to form a semi-manufactured product for placement in a die mold. (3) The semi-manufactured-product shaped into the predetermined shape is placed in the die mold. (4) The semi-manufactured product is pressed in the die mold and heated under temperature higher than a melting point of the thermoplastic resin contained in the prepreg tapes, and then cooled under temperature lower than the melting point of the same resin.

Furthermore, Patent Document 1 discloses a technology of stitching the laminated layers configuring the sheet not only before they are shaped into a predetermined shape but also after they are shaped into the predetermined shape.

Patent Document 2 discloses a method of manufacturing a fiber-reinforced plastic composite material having a predetermined shape. This method includes the steps of embroidering on a base material using reinforcing fibers in accordance with a shape and requirement of composite material to be manufactured in such a manner that a desired amount of reinforcing fibers are embroidered in plural directions on a predetermined area of the base material; removing portions of the base member on which the embroidery is not applied; and using the embroidery as a core material to form a fiber-reinforced plastic composite material through means of a general technique such as a hand lay up method.
Patent Document 3 (EP 2090423 A1) presents a multilayer thermoplastic-resin-reinforced sheet material whit improved mechanical properties in which a thermoplastic resin is used as a matrix.
A multilayer thermoplastic-resin-reinforced sheet material is formed by stacking thermoplastic-resin-reinforced sheet materials each formed of a reinforcing-fiber sheet material, consisting of a plurality of reinforcing fibers arranged in a predetermined direction in a sheet-like structure. A thermoplastic-resin sheet material is joined to a surface of the reinforcing-fiber sheet material and is stitched them together with an integration thermoplastic-resin fiber tow composed of the same material as the thermoplastic-resin sheet material. The reinforcing-fiber sheet materials are stacked such that their reinforcing directions are multiaxial.

Patent Document 4 (JP002008290421A) discloses further a method of manufacturing a molding comprising a prepreg laminate. The manufacturing method of the molding comprising the prepreg laminate comprises a first process of cutting to a predetermined form a reinforced fiber substrate in which a matrix resin is preliminarily impregnated to manufacture a prepreg piece, a second process of interfacing neighboring prepreg pieces P1, P2 mutually in a stance abutting or confronting at intervals, to manufacture predetermined three-dimensionally shaped composites B1, B2, and B3, and a third process of manufacturing a three-dimensionally shaped molding B4 by overlapping in order while pressure-forming plural composites B1, B2, and B3.

Patent Document 5 (JP2001096653A) discloses a composite material and a method for producing of the same. A body plate made of the composite material is produced by the method of manufacturing the material comprising a first step of laminating a resin prepreg impregnated with a synthetic resin on a reinforced fiber layer to form a part of an outer panel, a second step Laminating the prepregs on a part of the laminated plate by a step to form a part of a stringer, a third step of stitching a part of the stringer and a part of the plate, and a fourth step of laminating the prepregs at a position of the plate and on the part of the stringer. In this case, no wasteful seams are formed on the thus produced plate to avoid damage to the reinforcing fiber, and the fiber is not easily released even under a load.

Patent Document 6 (JP2007001089A) discloses a method for molding a fiber-reinforced thermoplastic composite material. An intermediate which forms a prepreg material with reinforcing fibers impregnated with a thermoplastic resin in a prescribed shape to be set in a mold is produced. Next, the intermediate produced in an intermediate production process is set in the mold. The intermediate set in the mold in a setting process is pressed, heated to a temperature higher than the melting point of the thermoplastic resin of the fiber-reinforced thermoplastic composite material, molded, and then cooled to a temperature lower than the melting point of the thermoplastic resin. In a molding process, the reinforcing fibers are already impregnated with the thermoplastic resin and the composite material can be molded in a relatively short time.

The following prior art documents disclose technological background art for the present invention:

### Patent Literature

Patent Document 1: Japanese Unexamined Patent Publication No. 2007-1089
Patent Document 2: Japanese Unexamined Patent Publication No. 60-11339
Patent Document 3: EP 2090423 A1
Patent Document 4: JP 2008290421A
Patent Document 5: JP 2001096653A
Patent Document 6: JP 2007001089A

### SUMMARY OF INVENTION

### Technical problem

The method for forming the fiber-reinforced thermoplastic composite material according to Patent Document 1, however, adversely requires an additional operation for shaping the laminated layers of sheet into a predetermined shape for replacement in the die mold, following the operations of parallely placing and laminating the prepreg tapes into layers.

Furthermore, in this Patent Document 1, since portions of the laminated sheet being cut and removed therefrom for providing the predetermined shape is wasted, yields of the laminated sheet in manufacturing a product is reduced. In addition, such a situation increases a manufacturing cost particularly when expensive fibers such as carbon fibers are used.

In general, a fiber-reinforced composite material has an extremely high tensile strength against force applied in a longitudinal direction of fibers and has an extremely low tensile strength against force applied in a direction perpendicular to the longitudinal direction of the fibers. Thus, in Patent Document 1, an external tensile force applied to an end surface of the fiber-reinforced composite material may cause the end surface to easily crack or break, depending on a disposed direction of the fibers.

Furthermore, in Patent Document 1, the stitching operation is performed on the laminated prepreg layers of sheet before or after completion of the shaping operation for providing a predetermined shape, so that the prepreg tapes forming the laminated prepreg layers of sheet may be displaced during the stitching operation.

In the method for manufacturing the fiber-reinforced plastic composite material disclosed in Patent Document 2, the fiber-reinforced plastic composite material is manufactured by impregnating melted plastic material into the embroidered fiber having a predetermined shape. In general, melted high polymer such as plastic has an extremely high velocity, so that the melted plastic is not liable to impregnate into the core material made of fibers. This poses a problem of unsuccessful integration between the core material and the plastic, thereby reducing the strength of the fiber-reinforced plastic composite material.

It is therefore an object of the present invention to provide a method for laminating fiber-reinforced thermoplastic resin prepreg tapes to form a near net shape for a mold product with improved yields, strength and rigidity including bending strength and tensile strength, which method is applied in an operation of forming a mold product of fiber-reinforced thermoplastic resin having a predetermined shape.

### Solution to problem

The term "prepreg" in this specification of the present invention refers to a composite material comprised of thermoplastic resin as a base material and fibers as a reinforcing material, whereas "prepreg tape" refers to a belt-shaped element made of the prepreg and provided with a width of 1 to 100 mm.

Furthermore, the term "near net shape" in this specification refers to a semi-manufactured product with improved yields wherein only little portion of the semi-manufactured product is squeezed out during a pressing operation of the semi-manufactured product in a die mold. The semi-manufactured product is composed of laminated fiber-reinforced thermoplastic resin prepreg tapes, and requires no extra removing or shaping operations for removing unwanted or unneeded portions thereof prior to the pressing operation by the die mold.

In order to solve the problems described above, a method for laminating fiber-reinforced thermoplastic resin prepreg according to a first aspect of the present invention comprising:
forming a flat layer made of a plurality of fiber-reinforced thermoplastic resin prepreg tapes by means of a stitching process in which each fiber-reinforced thermoplastic resin prepreg tape is placed on a sheet-shaped base material at a desired position and direction, stitched thereto, and cut in a desired length; and
forming at least another flat layer made of a plurality of fiber-reinforced thermoplastic resin prepreg tapes by means of a subsequnet stitching process in which each fiber-reinforced thermoplastic resin prepreg tape is placed on the preceding flat layer made of the plurality of fiber-reinforced thermoplastic resin prepreg tapes at a desired position and direction to thereby form a near net shape of plural layers having a predetermined shape.

In the method of the first aspect of the present invention, at least one of the following arrangements is used in forming a single layer or plural layers of fiber-reinforced thermoplastic resin prepreg tapes to provide required strength and rigidity to a mold product, the arrangements including:
arranging a longitudinal direction of fibers contained in the fiber-reinforced thermoplastic resin prepreg tapes to be aligned with a direction of tensile strength to be applied to a mold product;
arranging the longitudinal direction of fibers contained in the fiber-reinforced thermoplastic resin prepreg tapes not to be perpendicular to the direction of tensile strength to be applied to the mold product;
arranging to provide fiber-reinforced thermoplastic resin prepreg tapes to a portion or narrow portion nearby a section where a group of fiber-reinforced thermoplastic resin prepreg tapes meets another group of fiber-reinforced thermoplastic resin prepreg tapes whose fibers' longitudinal direction differs from fibers of the former prepreg tapes; and
arranging to provide fiber-reinforced thermoplastic resin prepreg tapes to a portion extending above or below a section where a group of fiber-reinforced thermoplastic resin prepreg tapes meets another group of fiber-reinforced thermoplastic resin prepreg tapes whose fibers' longitudinal direction differs from fibers of the former prepreg tapes (second aspect of the invention).

In the method of the first or second aspect of the present invention, stitching is thoroughly applied by providing sewing threads with a small distance therebetween to the laminated fiber-reinforced thermoplastic resin prepreg tapes on an area where detachment or deformation of layers is liable to be generated, in order to provide a mold product having required strength and rigidity (third aspect of the invention).

In the method of the first, second or third aspect of the present invention, the sheet-shaped base material is composed of the same thermoplastic resin as the resin contained in the fiber-reinforced thermoplastic resin prepreg tapes, and is configured in a form of a plastic sheet, a plastic film, a cloth, a knit, a mat, a stitching sheet, or a desired combination thereof (fourth aspect).

In the method of the first, second, third or fourth aspect of the present invention, the stitching process for the near net shape of a mold product is performed by an embroidery sawing machine including a moving device for moving an object to be straightly stitched in the X- and Y-axis directions in accordance with a programmed control data including stitching sawing data, disposition data of prepreg tapes, and cutting position data (fifth aspect).

### Advantageous Effects of Invention

In the first aspect of the present invention, a configuration of a near net shape made of the laminated fiber-reinforced thermoplastic resin prepreg tapes can be formed in a shape that is substantially identical to a configuration of a mold product, so that highly improved yields of the fiber-reinforced thermoplastic resin prepreg tapes ca be provided. In addition, it becomes possible to reduce an amount of expensive reinforced fibers to be used in the fiber-reinforced thermoplastic resin prepreg tapes, so that a material cost as well as industrial waste can be largely reduced.

Furthermore, the first aspect of the present invention can exclude the cutting operation of the prior art wherein a laminated large sheet is formed with a plurality of layers composed of the fiber-reinforced thermoplastic resin prepreg tapes and is shaped into a desired form.

Furthermore, since the shape of the laminated fiber-reinforced thermoplastic resin prepreg tapes can be formed substantially identical to that of a mold product, the laminated prepreg tapes can be easily set in a press die mold.

Each of the fiber-reinforced thermoplastic resin prepreg tapes is stitched immediately after it is placed, so that each prepreg tape is not displaced from its proper position despite a postion and a direction thereof. Each of the prepreg tape can be cut in a desired length before or after placement thereof and before or after stitching thereof. More specifically, the prepreg tape can be cut 1) after placement and stitiching thereof, 2) after placement and before stitching thereof, and 3) before placement and stitching thereof.

Each of the fiber-reinforced thermoplastic resin tapes placed at a desired position and direction is cut in a desired length, so that it can be placed in any desired directions on a same layer.

Each of the fiber-reinforced thermoplastic resin prepreg tapes used in the present invention contains thermoplastic resin that is impregnated in the fibers without allowing generation of gaps between the fibers, and thus a spill of resin during consolidation of the laminated prepreg tapes is minimum, whereby a mold product with highly accurate precision can be provided.

The method of the second and third aspects of the present invention can provide required strength and rigidity to a mold product in addition to the advantageous effects of the first aspect of the invention.

The fourth aspect of the present invention provides the same advantageous effects as the first, second and third aspects of the present invention. The base material used in the present invention is composed of the same material as the thermoplastic resin contained in the fiber-reinforced thermoplastic resin prepreg tapes, which arrangement allows the base material to be melted and integrated with the prepreg tapes in a forming process of a mold product, whereby an operation of removing the base material can be excluded.

The fifth aspect of the present invention can provide an automatic manufacturing operation of a near net shape for a mold product in addition to the advantageous effects of the first, second, third and fourth aspects of the present invention.

### BRIEF DESCRIPTION OF DRAWINGS

Fig. 1 is a schematic view of an exemplary fiber-reinforced thermoplastic resin prepreg tapes used in the present invention;
Fig. 2 is a schematic view of an exemplary mold product manufactured through a method of the present invention;
Fig. 3 is a schematic plane view showing a first layer made of the fiber-reinforced thermoplastic resin prepreg tapes;
Fig. 4 is a schematic plane view showing a second layer made of the fiber-reinforced thermoplastic resin prepreg tapes; and
Fig. 5 is a schematic plane view showing a third layer made of the fiber-reinforced thermoplastic resin prepreg tapes.

### DESCRIPTION OF EMBODIMENTS

A process for forming a mold product will be described below, which process includes a preparation step performed prior to the present invention, a forming step of a near net shape for a mold product according to the present invention, and a forming step of the mold product performed upon completion of the present invention, in the named order. The forming step according to the present invention is aimed to improve yields of material, strength and rigidity of a mold product.

First, a continuous fiber-reinforced thermoplastic resin prepreg tape 1 to be used as a material in the present invention will be described. The continuous fiber-reinforced thermoplastic resin prepreg tape 1 is prepared by impregnating melted thermoplastic resin to continuous fibers oriented in one direction and is cooled by a cooling role. The continuous fiber-reinforced thermoplastic resin prepreg tape 1 to be used in the present invention can be one that is commercially available.

Although the width of the continuous prepreg tape 1 is selective, an excessively wide tape reduces a degree of freedom of disposition of the tape during a laminating process, whereas an excessively narrow tape results in adversely increased stitching operation and manufacturing time. Thus, an appropriate width of the prepreg tape is 1 to 100 mm, and preferably between 5 to 25 mm. The width of the continuous prepreg tape to be selected, however, is not limited to such a range for any particular use.

The thickness of the continuous prepreg tape 1 is also selective, and an excessively thick tape causes difficulty in needle stitching, and an excessively thin tape requires increased number of laminated tapes and involving additional manufacturing time. Thus, the thickness of the continuous prepreg tape 1 to be selected is preferred to be 0.05 to 0.8 mm, with an exception for any other particular use.

The reinforced-fibers forming the fiber-reinforced thermoplastic resin prepreg tape 1 can be selected from a carbon fiber, a glass fiber, an aramid fiber, a boron fiber and a Zylon (Registered Trademark by TOYO BOSEKI) fiber, depending on mechanical feature required by a mold product to be manufactured. A surface treatment can be applied onto the fibers in accordance with a type of use.

The thermoplastic resin forming the fiber-reinforced thermoplastic resin prepreg tape 1 can be selected from polyamide-type resin such as "nylon 6" 8, polyolefin-type resin such as polypropylene, polyphenylene sulfide resin, polyether ether ketone resion, polyethylene terephthalate resin and polycarbonate resin, depending on the features of resin to be used, which features include a range of molding temperature, heat resistance and water resistance.

Now, the preparation step performed prior to the present invention will be described. It is preferred to laminate the prepreg tapes 1 so as not to produce portions to be wasted and so as to exclude a shaping process in order to manufacture mold products with improved yields of material, wherein the mold products are manufactured in a variety of shapes such as one configured by straight, oblique and curved lines in a left-and-right and upward directions, or one having a hole at an inner side thereof.

Accordingly, a thickness of the prepreg tapes 1 is determined as a height of a single layer, and the number of the prepreg tapes 1 to be laminated is determined in accordance with a thickness of the prepreg tape and a height of a mold product having a desired shape. The continuous prepreg tape 1 to be used is preferably selected so that it has a thickness of forming five to fifteen layers to accurately provide the height of the mold product to be manufactured.

With the above arrangement, a single layer formed of a plurality of prepreg tapes 1 is determined to form a shape of cross section of a mold product. Furthermore, as mentioned previously, the continuous prepreg tape 1 to be selected should have a width to properly form the shape of cross section of the mold product. Forming each shape of cross section of the mold product with a planer shape of each prepreg tape 1, and laminating each prepreg tape 1 from the bottom can produce a near net shape for a mold product with improved yields of material.

A mold product to be manufactured is demanded to have required strength and rigidity, so that the prepreg tapes 1 forming the near net shape should be placed so as to satisfy the required strength and rigidity of the mold product, and particularly portions of the mold product where bending stress, tensile force and compressive force are to be applied have to be provided with required strength and rigidity.

Accordingly, any of the arrangements described below should be accomplished. (1) A longitudinal direction of fibers contained in the fiber-reinforced thermoplastic resin prepreg tapes are arranged to be aligned with a direction of tensile strength to be applied to a mold product. (2) the longitudinal direction of fibers contained in the fiber-reinforced thermoplastic resin prepreg tapes are arranged not to be perpendicular to the direction of tensile strength to be applied to the mold product. (3) fiber-reinforced thermoplastic resin prepreg tapes are arranged to be provided to a portion or narrow portion nearby a section where a group of fiber-reinforced thermoplastic resin prepreg tapes meets another group of fiber-reinforced thermoplastic resin prepreg tapes whose fibers' longitudinal direction differs from fibers of the former prepreg tapes. (4) fiber-reinforced thermoplastic resin prepreg tapes are arranged to be provided to a portion extending above or below a section where a group of fiber-reinforced thermoplastic resin prepreg tapes meets another group of fiber-reinforced thermoplastic resin prepreg tapes whose fibers' longitudinal direction differs from fibers of the former prepreg tapes.

If all of the prepreg tapes 1 in a same layer are to be placed with their fibers being directed in a same direction, it becomes impossible to satisfy required strength and rigidity of a mold product. To avoid such an adversely effect, the prepreg tapes 1 are arranged to be placed in a various directions in a same layer.

Furthermore, stitching is arranged to be applied thoroughly on the prepreg tapes 1 by placing sewing threads with a small distance therebetween on an area where detachment or deformation of layers of prepreg tapes 1 is liable to be generated.

As described above, in the preparation step, the prepreg tapes 1 are arranged to be placed in various directions at a desired position to form a flat shape in each layer, in which the stitching is thoroughly applied partially.

Next, the forming step of a near net shape for a mold product according to the present invention will be described. In this step, a sheet-shaped base material 3 on which fiber-reinforced thermoplastic resin prepreg tapes 1 are placed and stitched is selected. The base material 3 is made of the same material as the prepreg tapes 1, so that it melts and is integrated with the prepreg tapes 1 by heat during a forming operation of a mold product, whereby a removing process of the base material 3 is excluded.

For the stitching of the prepreg tapes 1 on the base material 3, various types of sewing threads can be selected. For example, selection of sewing thread that melts at forming temperature of a mold product produces a mold product having a good appealing appearance with a smoothness on its outer surface, while selection of sewing thread that does not melt and maintains its original shape can prevent displacement of the fibers contained in the prepreg tapes 1 caused by compressive force during a forming operation of a mold product, thereby properly maintaining original disposed directions of the prepreg tapes 1.

Next, layers of the prepreg tapes are formed starting from a first layer in accordance with the preparation step that includes the arrangements of forming a flat shape in each layer by placing and disposing a plurality of prepreg tapes 1 containing fibers, and stitching the prepreg tapes 1. In forming the first layer, each of the fiber-reinforced thermoplastic resin prepreg tapes 1 is placed on a sheet-shaped base material 3 and is stitched on the base material 3 immediately after it is placed on the base material 3, in accordance with the arrangements for the first layer prepared in the preparation step. In the stitching process, thorough stitching is applied to an arranged portion of the prepreg tapes 1.

More specifically, in the stitching process, each of the prepreg tapes 1 is placed on an arranged position and in an arranged direction of the base material 3 prepared in the preparation step, and is immediately stitched thereon upon completion of the placement on the base material 3, and is then cut by a cutting device. The stitching is thoroughly applied on an arranged portion of the prepreg tapes 1.

After completion of the stitching and cutting of the first prepreg tape 1, a second prepreg tape 1 is placed next to or spaced from the first prepreg tape 1 on an arranged position and in an arranged direction on the base material 3 in a manner similar to or different from the first prepreg tape 1, and is stitched on the base material 3 with an arranged portion thoroughly stitched, in accordance with the preparation step. Upon completion of the stitching of the second prepreg tape 1 on the base material 3, the second prepreg tape 1 is cut by the cutting device. The consecutive process of the placement, stitching and cutting are repeatedly accomplished to thereby form a first flat layer made of a plurality of prepreg tapes 1.

After forming the first layer in accordance with the steps described above, a second layer is formed on the first layer. The second layer is formed in a manner substantially similar to that of the first layer, wherein prepreg tapes 1 are placed, disposed and stitched so as to reinforce an arranged portion of the first layer where more strength and rigidity are demanded, in accordance with the arrangements prepared in the preparation step.

A third layer is formed on the second layer in a manner similar to the first and second layers, wherein prepreg tapes 1 are placed, disposed and stitched so as to reinforce portions of the first and second layers where additional strength and rigidity are needed, in accordance with the arrangements prepared in the preparation step.

Each layer is laminated by repetition of the process described above to form a near net shape for a mold product.

It should be noted that a near net shape for a mold product can be automatically manufactured by means of a system that is operated based on control data of a sewing machine including stitching data, and disposition and cutting position data of prepreg tapes 1, wherein the sewing machine includes a device for feeding the prepreg tapes 1 and a device for linearly transferring the prepreg tapes (object to be stitched) 1 in the X- and Y-axis directions.

Finally, the forming step of a mold product will be described. The forming step includes two different modes of procedures, and either one of the procedures can be selected.

One of the procedures is such that a manufactured near net shape for a mold product is heated and melted under temperature higher than a melting point of the thermoplastic resin of the prepreg tapes 1 forming the near net shape, placed in a die mold of temperature lower than the melting point of the same resin, and press-formed and cooled down to manufacture a mold product. A type of means for heating the near net shape outside the die mold is selected without restriction, but one using an infrared heating device is most effective.

The other procedure is such that a manufactured near net shape for a mold product is placed in a die mold, heated therein under temperature higher than a melting point of the thermoplastic resin of the prepreg tapes 1, press-formed, and cooled down to temperature lower than the melting point of the same resin to form a mold product 2.

Exemplary methods of the present invention will be described below, which, however, do not intend to restrict the scope and range of the present invention.

### (First example)

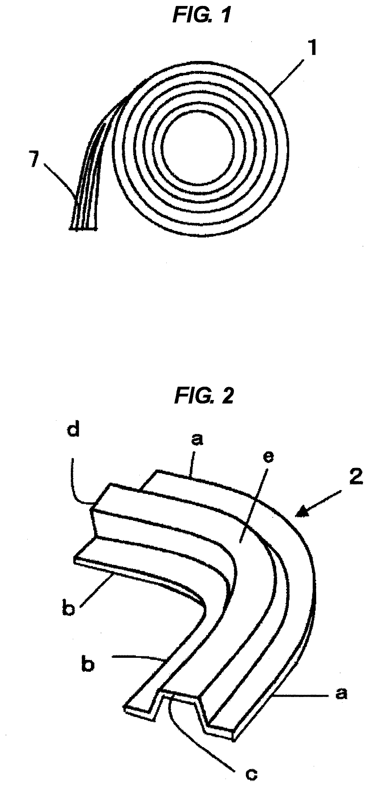

In the preparation step performed prior to the present invention, a continuous fiber-reinforced thermoplastic resin prepreg tape 1 shown in Fig. 1 is selected, which tape 1 is a composite material comprised of carbon fibers serving as reinforcing fibers 7 and "nylon 6" 8 serving as thermoplastic resin. The width of the continuous prepreg tape 1 is 15 mm and thickness thereof is 0.12 to 0.13 mm. The disposed direction of the reinforced fibers 7 is aligned with a longitudinal direction of the continuous prepreg tape 1.

Using the continuous prepreg tape 1 of Fig. 1, a mold product 2 of Fig. 2 is manufactured. With the continuous prepreg tape 1, eight layers are formed so that the mold product 2 can be provided with a desired dimension, strength and rigidity.

In order to give proper strength and rigidity to the mold product 2 particularly with respect to tensile strength in a horizontal direction thereof, each of the end surfaces (a), (b), (c), (d) is arranged to be provided with at least a single prepreg tape 1 whose fibers are directed parallel to the end surface.

Furthermore, in order to provide proper rigidity to the corner part (e) of the mold product 2, prepreg tapes 1 for reinforcement are to be provided to a portion nearby a section where two groups of prepreg tapes 1 meet with each other, and the section is provided with thorough stitching.

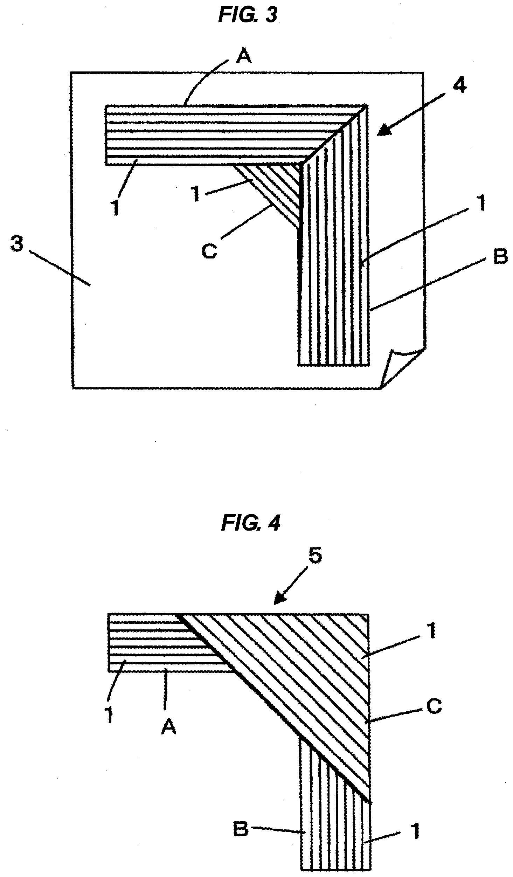

In Fig. 3, the sheet-shaped base material 3 is composed of "nylon 6" 8 that is, in turn, composed of thermoplastic material identical to the material of the fiber-reinforced thermoplastic resin prepreg tape 1 used in the present invention.

Fig. 3 shows a forming step of a near net shape for an exemplary mold product 2, wherein a first layer 4 is illustrated. Two groups of prepreg tapes 1, each composed of eight prepreg tapes 1, are disposed and stitched one by one on respective positions A, B in parallel to the respective linear end surfaces (a), (b), and are cut into a predetermined length. Then, another group of prepreg tapes 1 composed of six prepreg tapes are placed and stitched one by one on a position C to form a first layer 4, wherein the corner part (e) is thoroughly stitched.

A second layer 5 formed in the forming step of a near net shape for a mold product is shown in Fig. 4. The second layer 5 is formed on the first layer 4 such that two groups of prepreg tapes 1, each composed of eight prepreg tapes 1, are placed and stitched one by one on the respective positions A, B and cut so as to cause fibers of the prepreg tapes of the two groups to be paralleled with the respective end surfaces (a), (b). Then, another group of prepreg tapes 1 composed of twelve prepreg tapes 1 is placed and stitched one by one on the position C and cut in a desired length, wherein the corner part (e) is provided with thorough stitching.

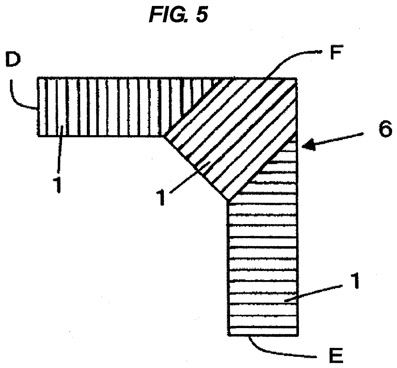

A third layer 6 formed in the forming step of the near net shape is shown in Fig. 5. The third layer 6 is formed on the second layer 5 such that two groups of prepreg tapes 1 each composed of nineteen (19) prepreg tapes 1 are stitched one by one on the respective disposing positions D, E and cut so as to cause fibers of the respective groups to be paralleled with the respective end surfaces (c), (d). Then, another group of prepreg tapes 1 composed of eight prepreg tapes 1 is stitched one by one on the disposing position C and cut in a desired length, wherein the corner part (e) is provided with thorough stitching.

With repetition of the process described above, a near net shape 2 of eight layers for a mold product is manufactured.

Lastly, a forming step of a mold product 2 will be described. In this final step, a manufactured near net shape is placed in an infrared heating device and heated under temperature of 250C° (degrees centigrade) for forty seconds. Then, the near net shape is placed in a die mold that is heated up to 150C° (degrees of centigrade), pressed under 3MPa for thirty seconds, and taken out from the die mold to thereby complete manufacturing of a mold product 2.

The manufactured mold product 2 taken out from the die mold was subjected to an operation for removing unneeded portions protruding therefrom, whereby yields of material after the removing operation was 90%. In contrast, yield of material in the convention method was 65%, where a multi-axial laminated sheet is shaped into a predetermined shape by a cutting or laminating operation to form a semi-manufactured product for placement in a die mold, and thus an additional removing operation is required in this stage besides a removing operation performed in a stage where a mold product is taken out from a die mold. Accordingly, the present invention can provide excessively improved yields of material.

### Reference sings list

1 fiber-reinforced thermoplastic resin prepreg tape; 2 mold product; 3 base material; 4 a first layer formed in a forming step of a near net shape of an exemplary mold product; 5 a second layer formed in the forming step of a near net shape of an exemplary mold product; 6 a third layer formed in a forming step of a near net shape of an exemplary mold product; 7 reinforce fibers; 8 nylon 6; (a) end surface; (b) end surface; (c) end surface; (d) end surface; (e) corner part; A disposing position; B disposing position; C disposing position: D disposing position; E disposing position; F disposing position.

## Claims

1. A method for laminating fiber-reinforced thermoplastic resin prepreg comprising: forming a flat layer made of a plurality of fiber-reinforced thermoplastic resin prepreg tapes (1) by means of a stitching process in which each fiber-reinforced thermoplastic resin prepreg tape (1) is placed on a sheet-shaped base material (3) at a desired position and direction, stitched thereto, and cut in a desired length;
forming at least another flat layer made of a plurality of fiber-reinforced thermoplastic resin prepreg tapes (1) by means of a subsequent stitching process in which each fiber-reinforced thermoplastic resin prepreg tape (1) is placed on the preceding flat layer made of the plurality of fiber-reinforced thermoplastic resin prepreg tapes (1) at a desired position and direction to thereby form a near net shape of plural layers having a predetermined shape.

2. The method of claim 1, wherein at least one of the following arrangements is used in forming a single layer or plural layers of fiber-reinforced thermoplastic resin prepreg tapes to provide required strength and rigidity to a mold product (2), the arrangements including:
arranging a longitudinal direction of fibers contained in the fiber-reinforced thermoplastic resin prepreg tapes (1) to be aligned with a direction of tensile strength to be applied to a mold product (2);
arranging the longitudinal direction of fibers (7) contained in the fiber-reinforced thermoplastic resin prepreg tapes (1) not to be perpendicular to the direction of tensile strength to be applied to the mold product (2);
arranging to provide fiber-reinforced thermoplastic resin prepreg tapes (1) to a portion or narrow portion nearby a section where a group of fiber-reinforced thermoplastic resin prepreg tapes (1) meets another group of fiber-reinforced thermoplastic resin prepreg tapes (1) whose fibers' longitudinal direction differs from fibers of the former prepreg tapes; and
arranging to provide fiber-reinforced thermoplastic resin prepreg tapes to a portion extending above or below a section where a group of fiber-reinforced thermoplastic resin prepreg tapes (1) meets another group of fiber-reinforced thermoplastic resin prepreg tapes (1) whose fibers' longitudinal direction differs from fibers of the former prepreg tapes.

3. The method of claim 1 or 2, wherein stitching is thoroughly applied by providing sewing threads with a small distance therebetween to the laminated fiber-reinforced thermoplastic resin prepreg tapes (1) on an area where detachment or deformation of layers is liable to be generated, in order to provide a mold product (2) having required strength and rigidity.

4. The method of claims 1, 2 or 3, wherein the sheet-shaped base material (3) is composed of the same thermoplastic resin as the resin included in the fiber-reinforced thermoplastic resin prepreg tapes (1), and is configured in a form of a plastic sheet, a plastic film, a cloth, a knit, a mat, a stitching sheet, or a desired combination thereof.

5. The method of claim 1, 2, 3 or 4, wherein the stitching process for the near net shape of a mold product (2) is performed by a embroidery sawing machine including a moving device for moving an object to be straightly stitched in the X- and Y-axis directions in accordance with a programmed control data including stitching sawing data, disposition data of prepreg tapes, and cutting position data.

## Patentansprüche

1. Verfahren zum Laminieren von faserverstärktem thermoplastischem Harz-Prepreg, umfassend:
Bilden einer flachen Schicht, die aus mehreren faserverstärkten thermoplastischen Harz-Prepreg-Bändern (1) besteht, mittels eines Nähprozesses, bei dem jedes faserverstärkte thermoplastische Harz-Prepreg-Band (1) auf einem folienförmigen Basismaterial (3) in einer gewünschten Position und Richtung angeordnet wird, daran genäht wird und auf eine gewünschte Länge geschnitten wird, und
Bilden mindestens einer weiteren flachen Schicht, die aus mehreren faserverstärkten thermoplastischen Harz-Prepreg-Bändern (1) besteht, mittels eines anschließenden Nähprozesses, bei dem jedes faserverstärkte thermoplastische Harz-Prepreg-Band (1) auf der vorherigen flachen Schicht, die aus den mehreren faserverstärkten thermoplastischen Harz-Prepreg-Bändern (1) besteht, in einer gewünschten Position und Richtung angeordnet wird, um dadurch mehrere Schichten nahezu netzförmig in einer zuvor festgelegten Gestalt anzuordnen.

2. Verfahren nach Anspruch 1, wobei mindestens eine der folgenden Anordnungen beim Bilden einer einzelnen Schicht oder mehrerer Schichten aus faserverstärkten thermoplastischen Harz-Prepreg-Bändern verwendet wird, um einem Formprodukt (2) die nötige Festigkeit und Steifigkeit zu, wobei die Anordnungen Folgendes umfassen:
Anordnen einer Längsrichtung von Fasern, die in den faserverstärkten thermoplastischen Harz-Prepreg-Bändern (1) enthalten sind, dergestalt, dass sie auf eine Richtung einer Zugfestigkeit ausgerichtet sind, die auf ein Formprodukt (2) einwirken soll;
Anordnen der Längsrichtung von Fasern (7), die in den faserverstärkten thermoplastischen Harz-Prepreg-Bändern (1) enthalten sind, dergestalt, dass sie nicht senkrecht zu der Richtung der Zugfestigkeit verlaufen, die auf das Formprodukt (2) einwirken soll;
Anordnen faserverstärkter thermoplastischer Harz-Prepreg-Bänder (1) an einem Abschnitt oder schmalen Abschnitt nahe einer Sektion, wo eine Gruppe aus faserverstärkten thermoplastischen Harz-Prepreg-Bändern (1) auf eine andere Gruppe aus faserverstärkten thermoplastischen Harz-Prepreg-Bändern (1) trifft, deren Faser-Längsrichtung sich von Fasern der vorherigen Prepreg-Bänder unterscheidet, und
Anordnen faserverstärkter thermoplastischer Harz-Prepreg-Bänder an einem Abschnitt, der sich über oder unter einer Sektion erstreckt, wo eine Gruppe aus faserverstärkten thermoplastischen Harz-Prepreg-Bändern (1) auf eine andere Gruppe aus faserverstärkten thermoplastischen Harz-Prepreg-Bändern (1) trifft, deren Faser-Längsrichtung sich von Fasern der vorherigen Prepreg-Bänder unterscheidet.

3. Verfahren nach Anspruch 1 oder 2, wobei das Nähen gründlich ausgeführt wird, indem Nähfäden mit einem geringen Abstand zwischen sich in die laminierten faserverstärkten thermoplastischen Harz-Prepreg-Bänder (1) in einem Bereich eingezogen werden, wo es vermutlich zu einem Ablösen oder Verformen von Schichten kommt, um ein Formprodukt (2) bereitzustellen, das die geforderte Festigkeit und Steifigkeit aufweist.

4. Verfahren nach den Ansprüchen 1, 2 oder 3, wobei das folienförmige Basismaterial (3) aus dem gleichen thermoplastischen Harz zusammengesetzt ist wie das Harz, das in den faserverstärkten thermoplastischen Harz-Prepreg-Bändern (1) enthalten ist, und in Form einer Kunststofffolie, eines Kunststofffilms, eines Tuchs, eines Gewirks, einer Matte, einer Nähbahn oder einer gewünschten Kombination davon ausgebildet ist.

5. Verfahren nach Anspruch 1, 2, 3 oder 4, wobei der Nähprozess für die nahezu netzförmige Gestalt eines Formprodukts (2) durch eine Stickmaschine ausgeführt wird, die eine Bewegungsvorrichtung aufweist, um ein Objekt so zu bewegen, dass es geradlinig in der X- und der Y-Achsenrichtung gemäß programmierten Steuerungsdaten genäht wird, die Stickdaten, Anordnungsdaten von Prepreg-Bändern und Schneidpositionsdaten enthalten.

## Revendications

1. Procédé de stratification de préimprégné en résine thermoplastique renforcée de fibres, comprenant les étapes suivantes :
former une couche plate constituée d'une pluralité de rubans de préimprégné en résine thermoplastique renforcée de fibres (1) au moyen d'un processus de piquage dans lequel chaque ruban de préimprégné en résine thermoplastique renforcée de fibres (1) est placé sur un matériau de base en forme de feuille (3) à une position et dans une direction souhaitées, piqué sur celle-ci et découpé à une longueur souhaitée ;
former au moins une autre couche plate constituée d'une pluralité de rubans de préimprégné en résine thermoplastique renforcée de fibres (1) au moyen d'un processus de piquage ultérieur dans lequel chaque ruban de préimprégné en résine thermoplastique renforcée de fibres (1) est placé sur la couche plate précédente constituée de la pluralité de rubans de préimprégné en résine thermoplastique renforcée de fibres (1) à une position et dans une direction souhaitées pour former ainsi une forme quasi définitive de plusieurs couches ayant une forme prédéterminée.

2. Procédé selon la revendication 1, dans lequel au moins l'une des dispositions suivantes est utilisée dans la formation d'une seule couche ou de plusieurs couches de rubans de préimprégné en résine thermoplastique renforcée de fibres pour conférer la résistance et la rigidité requises à un produit moulé (2), les dispositions incluant :
disposer une direction longitudinale de fibres contenues dans les rubans de préimprégné en résine thermoplastique renforcée de fibres (1) pour qu'elle soit alignée sur une direction de force de traction à appliquer à un produit moulé (2) ;
disposer la direction longitudinale de fibres (7) contenues dans les rubans de préimprégné en résine thermoplastique renforcée de fibres (1) pour qu'elle ne soit pas perpendiculaire à la direction d'une force de traction à appliquer au produit moulé (2) ;
disposer de manière à placer des rubans de préimprégné en résine thermoplastique renforcée de fibres (1) à une partie ou une partie étroite voisine d'une section où un groupe de rubans de préimprégné en résine thermoplastique renforcée de fibres (1) rencontre un autre groupe de rubans de préimprégné en résine thermoplastique renforcée de fibres (1) dont la direction longitudinale des fibres diffère de celle de fibres des premiers rubans de préimprégné ; et
disposer de manière à placer des rubans de préimprégné en résine thermoplastique renforcée de fibres à une partie s'étendant au-dessus ou au-dessous d'une section où un groupe de rubans de préimprégné en résine thermoplastique renforcée de fibres (1) rencontre un autre groupe de rubans de préimprégné en résine thermoplastique renforcée de fibres (1) dont la direction longitudinale des fibres diffère de celle de fibres des premiers rubans de préimprégné.

3. Procédé selon la revendication 1 ou 2, dans lequel le piquage est appliqué minutieusement par mise en place de fils de couture ayant une faible distance entre eux sur les rubans stratifiés de préimprégné en résine thermoplastique renforcée de fibres (1) sur une zone où le détachement ou la déformation de couches est susceptible de se produire, afin d'obtenir un produit moulé (2) possédant la résistance et la rigidité requises.

4. Procédé selon les revendications 1, 2 ou 3, dans lequel le matériau de base en forme de feuille (3) se compose de la même résine thermoplastique que la résine incluse dans les rubans de préimprégné en résine thermoplastique renforcée de fibres (1), et est conçu sous la forme d'une feuille de matière plastique, d'un film de matière plastique, d'une étoffe, d'un tissu à mailles, d'un mat, d'une feuille à coudre ou d'une combinaison souhaitée de ceux-ci.

5. Procédé selon la revendication 1, 2, 3 ou 4, dans lequel le processus de piquage de la forme quasi définitive d'un produit moulé (2) est réalisé par une machine à coudre brodeuse comportant un dispositif mobile destiné à déplacer un objet à coudre en ligne droite dans les directions des axes X et Y, conformément à des données de commande programmées incluant des données de couture par piquage, des données de disposition de rubans de préimprégné, et des données de position de coupe.
